Europäisches Patentamt

European Patent Office

Office européen des brevets

(19)

(11) Veröffentlichungsnummer : **0 137 357**

**B1**

(12) **EUROPÄISCHE PATENTSCHRIFT**

(45) Veröffentlichungstag der Patentschrift :
**23.12.87**

(21) Anmeldenummer : **84111051.3**

(22) Anmeldetag : **17.09.84**

| E R R A T U M |
| --- |

(SEITE, SPALTE, ZEILE)
(PAGE, COLUMN, LINE)
(PAGE, COLONNE, LIGNE)

| DIE TEXTSTELLE :<br>TEXT PUBLISHED :<br>LE PASSAGE SUIVANT : | | | | LAUTET BERICHTIGT:<br>SHOULD READ :<br>DEVRAIT ETRE LU : |
| --- | --- | --- | --- | --- |
| wobei die Menge des Lösungsmittel-<br>gemisches 75155 Gew.-%, bezogen<br>auf...... | 3 | 3 | 53-55 | wobei die Menge des Lösungsmittel-<br>gemisches 75 - 155 Gew.-%, bezo-<br>gen auf ....... |

| Tag der Entscheidung<br>über die Berichtigung<br>Date of decision on<br>rectification:<br>Date de décision portant<br>sur modification: | )<br>)<br>) 21.04.88<br>) ...............<br>)<br>) | Ausgabe- und Ver-<br>öffentlichungstag:<br>Issue and publication<br>date:<br>Date d'edition et de<br>publication: | )<br>)<br>) 15.06.88<br>) ...............<br>)<br>) | Patbl.Nr.)<br>             88/24<br>EPB no:) ........<br><br>Bull. no:) |
| --- | --- | --- | --- | --- |

**Europäisches Patentamt**

**European Patent Office**

**Office européen des brevets**

(19)

(11) Veröffentlichungsnummer : **0 137 357
B1**

(12) **EUROPÄISCHE PATENTSCHRIFT**

(45) Veröffentlichungstag der Patentschrift :
23.12.87

(51) Int. Cl.⁴ : **C 08 B   5/04**

(21) Anmeldenummer : **84111051.3**

(22) Anmeldetag : **17.09.84**

(54) **Verfahren zur Herstellung rieselfähiger Nitrocellulose.**

(30) Priorität : **26.09.83 DE 3334823**

(43) Veröffentlichungstag der Anmeldung :
**17.04.85 Patentblatt 85/16**

(45) Bekanntmachung des Hinweises auf die Patenterteilung : **23.12.87 Patentblatt 87/52**

(84) Benannte Vertragsstaaten :
**DE FR GB**

(56) Entgegenhaltungen :
**DE-A- 1 443 387
DE-B- 1 063 506
GB-A-   130 619
GB-A- 1 175 607
US-A- 2 895 844
US-A- 3 198 645**

(73) Patentinhaber : **Wolff Walsrode Aktiengesellschaft
Postfach
D-3030 Walsrode 1 (DE)**

(72) Erfinder : **Lühmann, Erhard, Dipl.-Ing.
Kastanien Weg 2
D-3036 Bomlitz (DE)**
Erfinder : **Hoppe, Lutz, Dr.
Am Badeteich 8
D-3030 Walsrode (DE)**
Erfinder : **Szablikowski, Klaus Dr.
Claudiusstrasse 5
D-3030 Walsrode (DE)**

(74) Vertreter : **Zobel, Manfred, Dr. et al
c/o BAYER AG K-RP Patentabteilung Q 18
D-5090 Leverkusen-Bayerwerk (DE)**

## Beschreibung

Gegenstand der Erfindung sind Verfahren zur Herstellung rieselfähiger, faserfreier, lagerstabiler Nitrocellulose, indem man die mit Wasser oder Alkohol gefeuchtete Nitrocellulose mit einem Lösungsmittelgemisch aus einem Lösungsmittel für Nitrocellulose und einem niedrigen aliphatischen Alkohol kurz behandelt, die alkoholhaltige flüssige Phase dekandiert und die nitrocellulosehaltige Phase mit Hilfe eines Schneckenextruders zu Granulat verarbeitet.

Nitrocellulose muß, da es sich im trockenen Zustand selbst leicht entzündet, mit einem Anfeuchtmittel wie einem niedrigen Alkohol, vorzugsweise Methanol, Ethanol, Isopropanol oder Butanol behandelt werden, um die Entzündungsgefahr bei Lagerung und Transport zu verringern. Diese alkoholfeuchte Nitrocellulose wird in Form faseriger Wolle oder als verdichtete Ware in den Handel gebracht. Im ersten Fall entstehen wegen des niedrigen Schüttgewichts hohe Frachtkosten, die bei der verdichteten Ware nicht anfallen. Da aber beim Verdichtungsvorgang die fasrige Struktur der Wolle erhalten bleibt, fällt bei der Verarbeitung und Handhabung durch Handelsformen in aller Regel ein hoher Staubanfall an, der die Entzündungsgefahr wieder vergrößert.

Es besteht daher ein Bedarf, alkoholfeuchte Nitrocellulose in rieselfähige, vorzugsweise granulierte Form, zur Verfügung zu stellen.

Solche Verfahren sind bereits in der DAS 3 041 085 beschrieben, indem man Nitrocellulose in einem Lösungsmittelgemisch bestehend aus einem Löser und Nichtlöser für die Nitrocellulose zu einer homogenen, nichtklebrigen Phase auflöst und anschließend gegebenenfalls nach der gewünschten Formgebung die flüchtigen Bestandteile wie Wasser und Alkohol durch Destillation entfernt. Man erhält dadurch ein leicht handhabbare Nitrocellulose, die sich insbesondere zur Herstellung von Zusätzen in Polyurethanlacken eignet, da die mit den Isocyanatgruppen reagierenden Verbindungen Wasser und Alkohol restlos entfernt worden sind.

In dem US-Patent 3 284 253 ist ein Verfahren zur Herstellung von mit einem Nichtlösungsmittel befeuchtete Nitrocellulose beschrieben. Nach diesem Verfahren wird die Nitrocellulose zunächst durch Zusatz eines organischen Lösungsmittels zu einer wäßrigen Nitrocelluloseaufschlämmung so weit erweicht, daß die Nitrocellulosestruktur verschwindet und anschließend zu Granulat verarbeitet, wobei organische Lösungsmittel abdestilliert und das restliche überschüssige Wasser abgetrennt wird. Dieser feuchten Nitrocellulose wird ein flüchtiges Nichtlösungsmittel, vorzugsweise Toluol, zugesetzt und das Wasserazeotrop abdestilliert, so daß letztendlich eine rieselfähige mit Toluol angefeuchtete Nitrocellulose erhalten wird.

Nachteilig bei diesen bekannten Verfahren zur Herstellung rieselfähiger Nitrocellulose sind die aufwendigen Behandlungsschritte der Nitrocellulose mit dem Nichtlösungsmittel, insbesondere die Destillationsstufe zur Entfernung des beim Aufweichen der Nitrocellulose mitverwendeten Nichtlösungsmittels. Dieser Verfahrensschritt kann durch das erfindungsgemäße Verfahren vermieden werden.

Die vorliegende Erfindung betrifft daher im Verfahren zur Herstellung rieselfähiger, faserfreier mit Alkohol befeuchteter Nitrocellulose, die dadurch gekennzeichnet sind, daß man die wasser- oder alkoholfeuchte Nitrocellulose in einem Gemisch aus einem Lösungsmittel für Nitrocellulose und einem aliphatischen $C_1$-$C_4$ Alkohol, vorzugsweise dem späteren Anfeuchtungsmittel, und Wasser aufweicht bis die Nitrocellulosefasern verschwinden, von dem dabei entstehenden Zweiphasengemisch die alkoholhaltige flüssige Phase dekandiert und die nitrocellulosehaltige Phase mit Hilfe eines Schneckenextruders in üblicher Form zu Granulat verarbeitet, wobei die Menge des Gemisches 75-155 Gew.-% bezogen auf trockene Nitrocellulose beträgt und die Komponenten des Gemisches nämlich Lösungsmittel für NC : Alkohol : Wasser im Verhältnis 1 : (0,2-4) : (0,2-4) stehen.

Als Alkohole, die in dem Lösungsmittelgemisch zur Behandlung der Nitrocellulose verwendet werden, eignen sich vorzugsweise die bekannten Anfeuchtungsmittel wie aliphatische Alkohole mit $C_1$-$C_4$, insbesondere Methanol, Ethanol, Propanol, Isopropanol und Butanol. Auch Mischungen dieser Alkohole können verwendet werden.

Als Lösungsmittel für die Nitrocellulose können auch alle bekannten und üblichen mit Wasser mischbaren Lösungsmittel verwendet werden, vorzugsweise aliphatische Ketone wie z. B. Aceton.

Die Nitrocellulose wird mit Alkohol oder Wasser befeuchtet, vorzugsweise mit Wasser befeuchtet, eingesetzt. So behandelte Nitrocellulosen können in allen Viskositätsstufen nach dem erfindungsgemäßen Verfahren zu Granulaten verarbeitet werden. Insbesondere eignet sich das erfindungsgemäße Verfahren zur Aufarbeitung von wasserfeuchter Nitrocellulose mit einem Stickstoffgehalt von 10,2 bis 12,4 Gew.-%.

Vorzugsweise wird das erfindungsgemäße Verfahren so durchgeführt, daß die mit Alkohol oder Wasser befeuchtete Nitrocellulose mit dem Lösungsmittelgemisch kurze Zeit (1 bis 10 Min., vorzugsweise 2 bis 5 Min.) unter Rühren bis zum Erweichen und Auflösen der Nitrocellulosefasern behandelt, das Rühren unterbrochen und die Mischung solange stehen gelassen bis sich eine Zweiphasenmischung bildet, wovon die flüssige Phase abgetrennt und die nitrocellulosehaltige Phase in einem Schneckenextruder zu Fäden versponnen und anschließend granuliert wird. Üblicherweise enthalten diese Granulate kaum noch Reste des Lösungsmittels, das für das Erweichen der Nitrocellulose verwendet worden ist. Um diese eventuell vorhandenen Lösungsmittelreste vollständig zu entfernen, kann das Granulat mit dem Anfeuchtungsmittel, das auch zur Lagerung der Nitrocellulose verwendet wird, extrahiert werden.

Die erfindungsgemäß hergestellte rieselfähige Nitrocellulose zeichnet sich durch ein hohes Schüttgewicht mit sehr geringem Staubanteil und damit geringerem Risiko bei der Lagerung und beim Transport aus. Die so hergestellte mit Anfeuchtungsmittel versehene Nitrocellulose kann zur Herstellung aller NC enthaltenden Farben und Lacke eingesetzt werden.

Beispiel

In einem Glasgefäß werden 100 g wasserfeuchte Nitrocellulose, bestehend aus 65 g trockener Nitrocellulose der Norm 24 E und 35 g Wasser mit 80 g Lösungsmittelgemisch, bestehend aus 30 g Isopropanol und 50 g Aceton, mit einem Rührer vermischt. Der Rührer wird abgeschaltet, und die NC-haltige Masse 5 Minuten stehen gelassen, die sich bildende, flüssige Phase abgetrennt und anschließend wird die NC-haltige Masse durch ein Schneckenaggregat zu einem Faden mit einem Durchmesser von 3 mm gedrückt, nach einer Lufttrocknung (ca. 4 Min.) in ca. 4 mm Teilstücke geschnitten wird.

Anschließend werden diese Granulate 3 mal in jeweils 40 g Isopropanol 1 h bei 25 °C extrahiert und solange getrocknet, bis die Zusammensetzung 65 Gew.-% NC und 35 Gew.-% Anfeuchtungsmittel erreicht wird.

Das Schüttgewicht der alkoholfeuchten, faserfreien Nitrocellulose aus dem Beispiel 1 betrug 684 g/l. Diese Granulate waren rieselfähig und wiesen eine sehr hohe Abriebbeständigkeit auf.

## Patentansprüche

1. Verfahren zur Herstellung von rieselfähiger, faserfreier, mit Alkohol befeuchteter Nitrocellulose (NC), dadurch gekennzeichnet, daß man die mit Wasser oder Alkohol befeuchtete Nitrocellulose mit einem Lösungsmittelgemisch aus einem Lösungsmittel für Nitrocellulose und einem aliphatischen $C_1$-$C_4$ Alkohol und Wasser aufweicht, bis die Nitrocellulosefasern verschwinden, von dem sich dabei bildende Zweiphasengemisch die alkoholhaltige, flüssige Phase dekandiert und die nitrocellulosehaltige Phase mit Hilfe eines Schneckenextruders zu Granulat verarbeitet, wobei die Menge des Lösungsmittelgemisches 75-155 Gew.-%, bezogen auf trockene Nitrocellulose, beträgt, und im Gemisch Lösungsmittel für NC : Alkohol : Wasser im Gewichtsverhältnis 1 : (0,2-4) : (0,2-4) verwendet werden.

2. Verfahren nach Anspruch 1, dadurch gekennzeichnet, daß als Lösungsmittel für (NC) aliphatische Ketone verwendet werden.

3. Verfahren nach Anspruch 1 oder 2, dadurch gekennzeichnet, daß als Alkohol Methanol, Ethanol, Propanol oder Isopropanol verwendet wird.

4. Verfahren nach Anspruch 1-3, dadurch gekennzeichnet, daß als Alkohol der zur Lagerung der granulierten Nitrocellulose verwendete Alkohol eingesetzt wird.

## Claims

1. Process for the production of free-flowing, non-fibrous, alcohol-moistened nitrocellulose (NC), characterised in that the nitrocellulose moistened with water or alcohol is softened with a solvent mixture of a solvent for nitrocellulose and an aliphatic $C_1$-$C_4$ alcohol and water, until the nitrocellulose fibres disappear, the alcohol-containing, liquid phase is decanted off from the resulting two-phase mixture and the nitrocellulose-containing phase is processed into a granulate using a screw extruder, the quantity of the solvent mixture being 75-155 % by weight, based on dry nitrocellulose, and the solvent for NC : alcohol : water are used in a weight ratio of 1 : (0.2-4) : (0.2-4) in the mixture.

2. Process according to Claim 1, characterised in that aliphatic ketones are used as the solvent for (NC).

3. Process according to Claim 1 or 2, characterised in that methanol, ethanol, propanol or isopropanol is used as the alcohol.

4. Process according to Claim 1-3, characterised in that the alcohol used for storing the granulated nitrocellulose is used as the alcohol.

## Revendications

1. Procédé pour la fabrication de nitrocellulose (NC) humectée d'alcool, exempte de fibres, s'écoulant bien, caractérisé en ce que l'on ramollit la nitrocellulose humectée d'eau ou d'alcool avec un mélange solvant d'un solvant de la nitrocellulose et d'un alcool aliphatique en $C_1$-$C_4$ et d'eau, jusqu'à ce que les fibres de nitrocellulose disparaissent, on décante la phase liquide contenant l'alcool du mélange à deux phases ainsi formé et on transforme la phase contenant la nitrocellulose en granulé au moyen d'une extrudeuse à vis, la quantité du mélange solvant étant de 75-155 % en poids, par rapport à la nitrocellulose sèche, et le solvant de la nitrocellulose, l'alcool et l'eau étant utilisés dans le mélange dans les proportions 1 : (0,2-4) : (0,2-4).

2. Procédé selon la revendication 1, caractérisé en ce que l'on utilise comme solvants pour la NC des cétones aliphatiques.

3. Procédé selon la revendication 1 ou 2, caractérisé en ce que l'on utilise comme alcool le méthanol, l'éthanol, le propanol ou l'isopropanol.

4. Procédé selon les revendications 1-3, caractérisé en ce que l'on utilise comme alcool l'alcool utilisé pour le stockage de la nitrocellulose granulée.